# EUROPÄISCHE PATENTANMELDUNG

(11) **EP 1 739 625 A1**
(43) Veröffentlichungstag der Anmeldung: **03.01.2007**
(21) Anmeldenummer: 05014385.8
(22) Anmeldetag: 01.07.2005
(51) Int. Cl.: G06T 15/00, G06T 15/70, G06T 11/20, A63F 13/00, A63F 13/10

(54) **Verfahren zur wechselseitigen Umwandlung von dreidimensionalen Bewegungsabläufen zu zweidimensionalen Graphen**

(71) Anmelder: Cenk, Tomaz, 47051 Duisburg (DE)
(72) Erfinder: Cenk, Tomaz, 47051 Duisburg (DE)
(74) Vertreter: Menges, Rolf

(57) **Zusammenfassung**

Die Erfindung betrifft ein Verfahren zur wechselseitigen Umwandlung von dreidimensionalen, mit der Zeit veränderlichen Bewegungsabläufen zu zweidimensionalen, statischen Graphen, insbesondere zur Umwandlung von zweidimensionalen Sport-Strategieaufzeichnungen zu virtuell dreidimensionalen Bewegungsabläufen einerseits und dreidimensionale Bewegungsabläufe einer Sportszene in eine Sport-Strategieaufzeichnung andererseits, wobei perspektivische und stilistische Rahmenbedingungen, wie Beobachtungsperspektive, naturalistische Darstellung der Elemente und Be- und Ausleuchtung, berücksichtigt werden und die zu wandelnden Informationen als numerische Koordinaten in das Verfahren eingehen und diese Informationen bei der Wandlung eines dreidimensionalen Bewegungsablaufes durch eine statistische Regressionsrechnung optimiert werden und bei der Wandlung von zweidimensionalen Daten in einen virtuell dreidimensionalen Bewegungsablauf zusätzliche vorwählbare Bewegungsdaten den einzelnen Objekten zugeordnet werden.

Hierdurch können Szenen eines Sportspieles objektiv analysiert werden und Trainingsabläufe können zweidimensional geplant und durch das erfindungsgemäße Verfahren visualisiert und animiert werden.

## Beschreibung

Die Erfindung betrifft ein Verfahren zur wechselseitigen Umwandlung von dreidimensionalen, mit der Zeit veränderlichen Bewegungsabläufen zu zweidimensionalen, statischen Graphen, insbesondere zur Umwandlung von zweidimensionalen Sport-Strategieaufzeichnungen zu virtuell dreidimensionalen Bewegungsabläufen einerseits und dreidimensionale Bewegungsabläufe einer Sportszene in eine Sport-Strategieaufzeichnung andererseits, wobei perspektivische und stilistische Rahmenbedingungen, wie Beobachtungsperspektive, naturalistische Darstellung der Elemente und Be- und Ausleuchtung, berücksichtigt werden.

Zur Erstellung von dreidimensionalen Bewegungsabläufen auf Computerbildschirmen oder vergleichbaren Wiedergabemedien werden üblicherweise aufwändige Softwareverfahren verwendet, um die Bewegungsabläufe flüssig und als in einem Guss erscheinend darzustellen. Hierzu werden in einem komplexen Verfahren die Daten eines Bewegungsablaufes zur Einsparung von Rechenzeit an dem zu visualisierenden Objekt selbst auf dem Bildschirm zunächst in vereinfachter Weise dargestellt und die einzelnen Objekte werden in dieser vereinfachten Darstellung des dreidimensionalen Bewegungsablaufes modelliert. Erst in einem späteren Verfahrensschritt werden die Daten mit Hilfe von sogenannter Render-Software zu einer Gesamtszene zusammengestellt, wobei der Renderer die stilistischen, naturalistischen und Ausleuchtungsdetails umsetzt.

In solchen Verfahren werden gegebenenfalls auch weitere Hilfsmittel, wie ein Stereoprojektor, gegebenenfalls als 3D-Sichthelm, und ein Datenhandschuh benutzt, um die einzelnen Objekte innerhalb der virtuellen 3D-Welt zu bewegen und zu modellieren.

Die bekannten Verfahren verfolgen das Ziel, einen zu modellierenden Bewegungsablauf am vereinfachten Objekt vorzunehmen, um dem Modellierer eine unmittelbare Ansicht in jeder einzelnen Szene zu gewährleisten. Erst in einem späteren und vom Benutzer unabhängigen Verfahrensschritt wird die Szene vom Software-basierten Verfahren unabhängig von den Eingaben eines Modellierers umgesetzt. Hochleistungsrechner sind dabei in der Lage, die einzelnen Szenen auch in Realzeit umzusetzen, so dass die oben genannte Zweistufigkeit nicht unbedingt notwendig ist. Gleich zwischen den Verfahren ist jedoch die üblicherweise vom Modellierer gewünschte Modellierung des zu visualisierenden Bewegungsablaufes im virtuellen dreidimensionalen Raum. Die Modellierung und die Realisierung des Bewegungsablaufes ist somit an ein System gebunden, dass sowohl die Modellierung wie auch die Detaildarstellung gleichermaßen durchführt.

Es wäre wünschenswert, wenn die Planung und Modellierung von Bewegungsabläufen von der Detaildarstellung getrennt werden könnte, um einem Modellierer die Möglichkeit zur Planung unabhängig von einem Eingabegerät zu ermöglichen, aber in keinem der oben genannten Verfahren ist es jedoch möglich, beispielsweise aus einer einfachen Zeichnung eine komplexe Bewegungsszene zu erstellen, wobei Umgebungsparameter vorgegeben oder erst bei der Detaildarstellung gewählt werden können.

Ein solches getrenntes Verfahren zur Erzeugung von komplexen Bewegungsabläufen wäre immer dann hilfreich, wenn es darum geht, komplexe Bewegungsszenen zu planen, wie beispielweise bei einer Choreographie oder auch bei einen Fußballspiel. Aber nicht nur die Darstellung der Bewegung verschiedener Spieler in einem Spiel oder Tänzer in einer Choreographie wäre von großem Vorteil, sondern es wäre auch von Vorteil, wenn ein Spiel schnell und frei von subjektiven Eindrücken eines Beobachters maschinell analysiert werden könnte, wobei die Bewegung der einzelnen Spieler oder auch die Bewegung der einzelnen Tänzer in einer Choreographie einfach und damit reduziert dargestellt werden würden.

Aufgabe der Erfindung ist es daher, ein Verfahren zur Bewegungsanalyse und -planung, insbesondere für die Erstellung von Sporttrainingsaufgaben und zur maschinellen Analyse von Bewegungsabläufen eines Sportspieles zur Verfügung zu stellen.

Die erfindungsgemäße Aufgabe wird gelöst durch die Merkmale des Patentanspruchs 1. Weitere vorteilhafte Ausgestaltungen der Erfindung ergeben sich aus den Unteransprüchen.

Als Ergebnis oder als Eingangsparameter des erfindungsgemäßen Verfahrens werden die komplexen Bewegungsabläufe von dreidimensionalen Bewegungen einzelner Elemente durch einen zweidimensionalen Graphen dargestellt. Dies bedeutet, dass bei der Wandlung einer dreidimensionalen Bewegungsszene in einen zweidimensionalen Graphen die dreidimensionale Bewegung durch ein System automatisch verfolgt und im Anschluss daran als eine einfache Strichzeichnung, dem zweidimensionalen Graphen, dargestellt wird, wobei die Striche der Zeichnung oder des Graphen stellvertretend für Bewegungen stehen. Hierdurch wird erreicht, dass eine mehrere Sekunden, gegebenenfalls sogar noch länger dauernde Szene, in der sich einzelne Objekte bewegen, durch eine statische zweidimensionale Darstellung wiedergegeben wird. In der zweidimensionalen und statischen Darstellung stehen Pfeile für eine Bewegung der einzelnen Objekte in der korrespondierenden Szene des dreidimensionalen Bewegungsablaufes.

Das Verfahren ist aber nicht nur in der Lage, die zeitabhängigen Koordinaten der Objekte in einem dreidimensionalen Bewegungsablauf als zweidimensionale Zeichnung wiederzugeben, sondern das erfindungsgemäße Verfahren erlaubt es auch, einfache Strichzeichnungen, in denen Bewegungen einzelner Objekte beispielsweise als Pfeile dargestellt werden, wieder in eine dreidimensionale Bewegung zurückzuverwandeln. Dieser dreidimensionale Bewegungsablauf wird als Folge von Koordinaten im dreidimensionalen Raum gespeichert, wobei zusätzliche Parameter, wie Zustand und gegebenenfalls rotatorische Koordinaten des Objektes als vorgegebenen Parameter dem Objekt zugeordnet werden.

In spezieller Ausgestaltung der Erfindung beschränkt sich das Verfahren auf die Erstellung von virtuell dreidimensionalen Bewegungsabläufen, insbesondere Szenen eines Fußballspiels, in welchem einzelne Elemente, beispielweise Spieler, Schiedsrichter und Ball, auf einem zweidimensionalen Wiedergabegerät animiert und perspektivische und stilistische Rahmenbedingungen wie Beobachtungsperspektive, naturalistische Darstellung der Elemente und Be-und Ausleuchtung berücksichtigt werden. Die Dateneingabe in diesem speziellen Verfahren erfolgt dabei durch das in dem Verfahren eingebettete Modul zur Erkennung und Interpretation eines einfachen Graphen, der beispielsweise als Handzeichnung erstellt wurde und so, beispielsweise mit Hilfe eines Scanners, in das Verfahren eingegeben wird.

Hierbei ist es möglich, dass auf die manuell erstellte Zeichnung als Eingabe verzichtet wird und die Eingabe statt dessen beispielweise durch eine Maus oder durch einen Trackpad oder durch andere vergleichbare Eingabemedien am Computer vorgenommen wird, wobei unterschiedliche Pfeilarten beziehungsweise unterschiedliche Gestiken, die mit den Eingabegerät vollzogen werden, für unterschiedliche Objekte und für unterschiedliche Bewegungsarten stehen. Unter Gestik wird eine Eingabe an einem Zeigegerät verstanden, die wiedererkennbaren Bewegungsmustern folgt. Beispielsweise die Verfolgung einer Schlangenlinie zur Darstellung einer Bewegungsart und die Verfolgung einer sägezahnartigen Linie zur Darstellung einer anderen Bewegungsart oder als implizite Zuschreibung von Objekteigenschaften. So ist es möglich, einen mit dem Zeigegerät durchgehend und linear geführten Strich als Bewegung eines Spielers zu interpretieren und beispielweise einen ruckartig am Zeigegerät eingegebenen Strich als die Bewegung eines Balls zu interpretieren. Der Anzahl unterschiedlicher und erkennbarer Gestiken für unterschiedliche Objekt- und Bewegungseigenschaften sind hierbei keine Grenzen gesetzt.

In einer statischen und zweidimensionalen Darstellung eines Bewegungsablaufes, hier einer Szene in einem Fußballspiel, ist es möglich, die zeitlich veränderliche Bewegung eines Spielers und die Bewegung eines Balls so darzustellen, in dem der bewegte Spieler durch einen Punkt A und einen Punkt B dargestellt wird, wobei ein Verbindungspfeil oder allgemeiner ein Verbindungsgraph die Bewegung des Spielers repräsentiert. Zusätzlich können verschiedene Symbole verschiedene Trainings- oder Spielelemente repräsentieren. Beispielweise können Spielstangen oder Trainingsstangen in den zweidimensionalen Graphen als einfache Striche eingebracht werden, die bei der Wandlung durch das erfindungsgemäße und softwarebasierte Verfahren zum dreidimensionalen und virtuellen Bewegungsablauf auf dem Spielfeld platziert werden. Um diese Stangen manövriert in der Bewegungsszene dann ein Objekt, hier Fußballspieler, ein weiteres Objekt, hier einen Ball, um so komplexe Spielsituationen in einer Angriffsszene zu generieren. Dabei sind der Art von verschiedenen Pfeilen für die Bewegung verschiedener Objekte keine Grenzen gesetzt.

In einem optionalen und zusätzlichen Verfahrensschritt wird nach der Eingabe der Datensatz bestehend aus Ausgangs- und Endpositionen und gegebenenfalls Bewegungslinien der einzelnen Objekte innerhalb des dreidimensionalen Bewegungsablaufes durch das erfindungsgemäße Verfahren optimiert. Dies bedeutet, dass die erfassten Koordinaten soweit verändert werden, dass eine Geschwindigkeit, die für ein Objekt angenommen wird, zu den Abständen von Start und Endpunkt einer Spielsituation passt. Dabei ist die Nebenbedingung zu berücksichtigen, dass nicht nur die Geschwindigkeit und der Start und Endpunkt der Bewegung eines Objektes berücksichtigt werden muss, sondern diese muss etwa gleichzeitig mit der Bewegung eines anderen Objektes enden, damit die nächste Bewegungsphase des dreidimensionalen Bewegungsablaufs starten kann. Denn in der zweidimensionalen Zeichnung werden die einzelnen Striche, beziehungsweise einzelne Pfeile so interpretiert, dass immer ein konzertierter Bewegungsablauf mehrerer Objekte in der dreidimensionalen Szene mehrere gleichzeitige Bewegungsabläufe einzelner Objekte umfasst, die parallel zu einander verlaufen. Sofern ein Bewegungsablauf aus mehreren einzelnen Szenen besteht, bedeutet dies, dass in einem zweidimensionalen Graphen beispielweise eine Bewegung eines ersten Objektes von Punkt A nach Punkt B zu Punkt C so interpretiert wird, dass das erste Objekt erst von Punkt A nach Punkt B bewegt wird, gleichzeitig wird beispielweise ein zweites Objekt in Bewegung gesetzt und das zweite Objekt bewegt sich so lange, bis das erste Objekt von Punkt A nach Punkt B gelangt ist. Zu diesem Zeitpunkt wechselt die Bewegung des ersten Objektes zu einer Bewegung von Punkt B nach Punkt C. Je nach geplantem Bewegungsablauf, beispielsweise die Einnahme der Position B durch das zweite Objekt von seinem Ausgangspunkt aus, muss gewährleistet sein, dass die vorgegebene Geschwindigkeit der Objekte, die durch dribbeln, langsam oder schnell laufen charakterisiert sind, zu den Anfangs- und Endpositionen, hier Punkt A und B, passt, so dass sich die unterschiedlichen Objekte an den Punkten treffen, die durch den zweidimensionalen Graphen vorgegeben wurden. Insofern ist es möglich, in der zweidimensionalen Zeichnung durch Reduktion eine widersprüchliche Darstellung zu erzeugen, die bei einer Umwandlung in eine dreidimensionale Szene zu unnatürlichen Bewegungsabläufen führen kann. Um diese unnatürlich erscheinenden Bewegungsabläufe zu verhindern, wird durch den optionalen Verfahrensschritt der Bewegungsablauf durch den Verfahrensschritt optimiert und in dem zweidimensionalen Graphen einerseits und auch in dem virtuell dreidimensionalen Bewegungsablauf andererseits festgehalten.

Aber es ist nicht nur von Vorteil, dass durch das erfindungsgemäße Verfahren dreidimensionale virtuelle Bewegungsabläufe auf einem Computerbildschirm oder einem vergleichbaren Wiedergabemedium dargestellt werden können, wobei die Quelle der dreidimensionalen Bewegung ein zweidimensionaler Koordinatensatz, beziehungsweise eine durch ein Eingabegerät erzeugte zweidimensionale Zeichnung ist, sondern es ist auch möglich, dass ein dreidimensionaler und realer Bewegungsablauf von einem Eingabegerät erfasst wird und dieser reale Bewegungsablauf wird nach Erfassung des realen Bewegungsablaufes als zweidimensionaler Graph dargestellt. Hierzu könnte im konkreten Fall eines Fußballspieles ein Stereokamerapaar die Position von Ball, den 22 Spielern und des Schiedsrichters feststellen und über die Zeit verfolgen und so die Positionsdaten ermitteln. In einem weiteren Schritt werden die Daten der konzertierten Bewegung soweit optimiert, dass hieraus ein Muster von verschiedenen linearen und gegebenenfalls einfach gekrümmten Bewegungen entsteht, in denen die Geschwindigkeit der Objekte nur in geringem Maße in vorgegebenen Grenzen variiert. Durch diese Vereinfachung und Reduktion der realen Bewegungsszene wird erreicht, dass die darzustellende Szene in dem Graphen nicht zu komplex wird, sodass diese schnell durch einen Menschen visuell erfasst werden kann. Als beispielhafte Zeitpunkte, in denen eine Synchronisation der Bewegungsszene in der Darstellung als zweidimensionaler Graph erreicht wird, bieten sich der Zeitpunkt eines Ballwechsels oder der Zeitpunkt einer abrupten Richtungsänderung eines Spielers an.

Das erfindungsgemäße Verfahren erlaubt eine objektive Erfassung der über die Zeit veränderlichen Koordinaten eines Spielers und die Darstellung einer gegebenenfalls komplexen Spielsituationen über mehrere Sekunden, die eine nachträgliche Analyse einer Trainingseinheit oder einer realen Spielsituation erlaubt. Beispielweise ist es möglich, parallel zu einem Fußballspiel oder zu einer anderen Bewegung eine Stereokamera die interessierenden Objekte zu verfolgen. Nach Anforderung wird von dem System, welches das erfindungsgemäße Verfahren durchführt, die Bewegung oder der Bewegungsablauf der letzten Sekunden des Fußballspiels als einfacher zweidimensionaler Graph dargestellt, wobei dieser zweidimensionaler Graph dann in das Übertragungsmedium, beispielsweise Fernsehen, eingeblendet wird.

Dies hätte den Vorteil, dass beispielweise zur Verfolgung einer Szene mit Potential zur Wahl als Tor des Monats die Strategie der Spieler in einem Graphen festgehalten werden könnte, wobei dieser Graph dazu verwendet werden kann, eine besonders elegante Spielsituation zu dokumentieren und diese gegebenenfalls später nachzuspielen oder sie zu trainieren.

Darüber hinaus ist es von Vorteil, dass das erfindungsgemäße Verfahren dazu verwendet werden kann, komplexe Strategien auf einem Papier zunächst zu planen und diese komplexe Strategien später virtuell dreidimensional zu visualisieren. Jeder beteiligte Spieler kann dadurch in der virtuell dreidimensionalen Animierung die zeitlich veränderliche Spielsituation aus dem eigenen Blickwinkel erfassen, sodass ein Trainieren, beziehungsweise ein Nachspielen der dokumentierten Spielsituation vereinfacht möglich ist. Hier kann in einem wechselseitigen Verfahren zunächst die Spielstrategie auf einem zweidimensionalen Graphen geplant werden, diese Spielsituation wird dann dreidimensional auf einem Computer dargestellt, wobei die Spieler diese Spielsituation aus verschiedenen Blickwinkeln zunächst am Bildschirm verfolgen können, um diese Situationen später selber nachzuspielen. Ein vorhandenes System, dass die Position der einzelnen Spieler, welche die dokumentierte Spielsituation eintrainieren sollen, erfasst und in einem weiteren Schritt aus der gemessenen Spielsituation wieder einen zweidimensionalen Graphen darstellt, kann dazu helfen, die Abweichung von der geplanten Strategie in zweidimensionaler Form deutlich darzustellen. Hierdurch wird ein optimales Feedback beim Trainieren erreicht, sodass eine auf dem Papier entworfene Strategie optimal umgesetzt werden kann.

Zur Erfassung der Daten ist es möglich, dass diese mit Hilfe von üblichen Zeigegeräten, wie beispielweise eine Maus, ein Trackpad, ein Graphiktablett oder ein Eingabehandschuh in das System zur Durchführung des Verfahrens eingegeben werden. Es ist aber auch möglich, dass eine Zeichnung, die mit gattungsgemäßem Stift und Papier angefertigt wurde, als eingescanntes Objekt dem System zur Durchführung des Verfahrens zur Verfügung gestellt wird, wobei dem erfindungsgemäße Verfahren ein weiteres Verfahren vorangestellt wird, aus der Zeichnung die einzelnen Objekte zu erfassen und daraus die Daten zu erzeugen.

Zur Erfassung der zweidimensionalen Zeichnung, die mit herkömmlichen Mitteln erstellt wurde, wird üblicherweise ein Scanner verwendet. Hierzu eignen sich nicht nur Scanner oder Faxgeräte, sondern jede beliebige Art der Wandlung von zweidimensionalen Daten in eine elektronisch lesbare Form. In besonders vorteilhafter Weise wird zur Eingabe eine Unterscheidung der Objekte dadurch vorgenommen, dass die Objekte mit unterschiedlichen Gestiken eingegeben werden. Hierzu ist es möglich, dass eine gradlinige Bewegung mit einem Zeigegerät zu einem einfachen Strich führt, welcher die Bewegung eines Fußballspielers darstellt. Es ist aber auch möglich, dass eine Schlangenlinie die Bewegung eines Ball darstellt und eine eher zackenförmige Bewegung die Bewegung eines gegnerischen Spielers darstellt. Auf diese Weise ist es möglich, mit Hilfe eines einzigen Eingabegerätes nur unter Verwendung unterschiedlicher Bewegungen bei der Eingabe von Start und Endpunkten einer einzelnen Spielsituation verschiedene Objekte einzugeben, ohne dass es notwendig ist, dem System zur Eingabe jeweils mitzuteilen, welches Objekt gerade mit Hilfe des Zeigegerätes beschrieben werden soll.

Die mathematische Optimierung und/oder Reduktion der Koordinatendaten entweder aus einem System zur Erfassung von realen dreidimensionalen Bewegungsabläufen oder aus den Koordinaten, die mit Hilfe eines Eingabegerätes, wie Zeiger oder Scanner erzeugt wurden, findet vorzugsweise durch eine statistische Regressionsrechnung statt. Außer der Optimierung der einzelnen Koordinaten in den Synchronisationspunkten kann eine Glättung der zeitlich veränderlichen Koordinaten vorgenommen werden, so dass der tatsächliche Bewegungsablauf, der gegebenenfalls mehrere Kurven oder Schleifen enthält, durch eine einfache Grade dargestellt wird. Der Grad der Reduktion der Bewegung kann dabei vorgewählt werden, sodass eine entsprechend dem Grad der Reduktion vorgewählte Reduktion der Bewegung stattfindet.

Die Erfindung wird anhand des folgenden Beispiel näher erläutert.

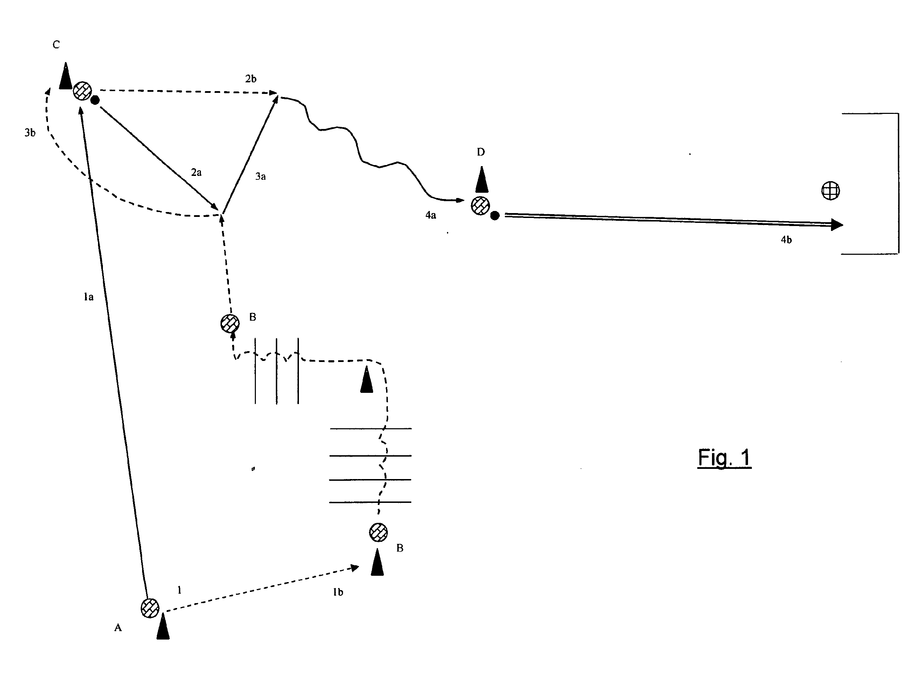

Es zeigt
- Fig. 1: einen Ausschnitt aus einer Strategiezeichnung, wie sie üblicherweise zum Training von Spielsituationen verwendet wird.

In Figur 1 sind verschiedene Objekte eines dreidimensionalen Bewegungsablaufes, hier speziell einer Szene in einem Fußballtraining, durch verschiedene Symbole in einer zweidimensionalen Zeichnung, einem Graphen, dargestellt.

Die Bedeutung der verschiedenen Symbole ist in der beiliegenden Bezugszeichenliste dargestellt, sodass die einzelnen Objekte, die eine Bewegung vollziehen, durch das korrespondierende Symbol und durch einen Pfeil dargestellt werden, wobei der Pfeil die Bewegungsrichtung des Objektes darstellt. In der Strategie-Zeichnung werden aufeinander folgende Szenen einer Bewegung durch aufeinander folgende Pfeile an den jeweiligen Objekte dargestellt. Eine Bewegung beginnt von einem Objekt, von dem nur eine Bewegungsrichtung ausgeht, läuft fort über die Positionen, an denen die korrespondierenden Symbole dargestellt sind und endet jeweils mit einer Bewegungsrichtung, die nicht in einer weiteren Darstellung eines Symbols endet.

In Figur 1 wird ein Bewegungsablauf vierer Spieler A, B, C und D dargestellt. Ausgehend von der Position des Spielers A mit Ball links unten in der Figur, beginnt die Bewegungsszene mit dem Zuspielen eines Balles von Spieler A an Spieler C, der links oben in der Figur 1 eingezeichnet ist. Hierzu bewegt sich der Ball entlang des Pfeils A1a in Richtung der Position des Spielers C. Unmittelbar nach dem Ballschuss von A bewegt sich Spieler A zur Position des Spielers B in dessen Startposition entlang des Bewegungspfeils A1b. Gleichzeitig mit der Bewegung von Spieler A setzt sich Spieler B durch den Stangenparcours in Bewegung entlang der Bewegungsrichtung B1. Spieler C nimmt den Ball von A entgegen und spielt den Ball zu dem sich C nähernden Spieler B entlang des Bewegungspfeils C2a und bewegt sich selbst entlang der Richtung C2b, wodurch Spieler C eine neue Position einnimmt. An diesem Punkt geht die erste Phase des Bewegungsablaufes in eine weitere Phase des Bewegungsablaufes über. B nimmt in dieser weiteren Phase den Ball von Spieler C entgegen und spielt den Ball weiter entlang des Bewegungspfeils B3a. Der Ball wird hier von Spieler C entgegengenommen, der sich an die korrespondierende Position etwa in der oberen Figurenmitte befindet, wo sich die Bewegungspfeile C2b und B3a treffen. Hier geht die Bewegungsszene in eine weitere Phase über, in der Spieler C den Ball entlang des Dribbel-Bewegungspfeils C4a dribbelt, bis Spieler C die ursprüngliche Position des den angreifenden Spielers D einnimmt und dort den Ball auf das rechts eingezeichnete Tor entlang C4B schießt, wo der Torhüter den Ball entgegennimmt.

Diese hier beschriebene Szene wird durch erfindungsgemäße Verfahren entsprechend der oben beschriebenen Bewegungsszene interpretiert und darauf folgend als virtueller dreidimensionaler Bewegungsablauf dargestellt. Hierbei ist es möglich, die verschiedenen Positionen A, B, C oder D aus der Kameraperspektive einzusehen und gegebenenfalls virtuell mitzulaufen, sodass sich auf dem Bildschirm ein Eindruck einstellt, wie ihn einer der Spieler A, B, C oder D selbst sehen würde oder wie ein dritter Beobachter dieses Szene beobachten könnte. Die virtuelle dreidimensionale Bewegung wird hier nicht dargestellt, da die dreidimensionale Bewegung nicht auf einem statischen Dokument darstellbar ist. Gegenstand der Erfindung ist aber die Umsetzung einer Figur gemäß Figur 1 in eine wie oben beschriebene virtuelle dreidimensionale Bewegung und umgekehrt.

In umgekehrter Reihenfolge kann die Position der verschiedenen Objekte durch eine Stereokamerapaar oder ein vergleichbar wirkendes Mittel festgestellt werden, wobei die so erfassten Koordinatendaten an das System zur Durchführung des erfindungsgemäße Verfahrens übermittelt werden. Durch das erfindungsgemäße Verfahren werden sodann die Daten durch Glätten und durch eine Regressionsrechnung reduziert und daraus wird wiederum ein zweidimensionaler Graph erzeugt.

### Bezugszeichenliste

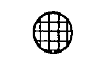 Torhüter
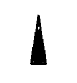 Hütchen
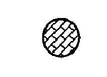 Spieler ohne Ball
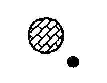 Spieler mit Ball
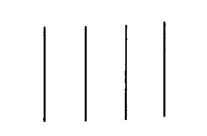 Stangenparcours
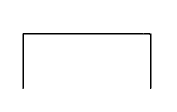 Tor
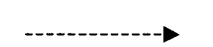 Laufbewegung eines Spielers
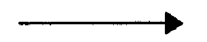 Bewegung eines Balles
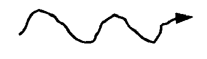 Dribbel-Bewegung eines Spielers
- A: Spieler
- B: Spieler
- A1a: Laufbewegung Spieler A
- A1b: Bewegung Ball
- B1: Laufbewegung Spieler B
- C2a: Laufbewegung Spieler C
- C2b: Bewegung Ball
- B3a: Laufbewegung Spieler B
- B3b: Bewegung Ball
- C4a: Dribbel-Bewegung Spieler C
- C4b: Bewegung Ball

## Patentansprüche

1. Verfahren zur wechselseitigen Umwandlung von dreidimensionalen, mit der Zeit veränderlichen Bewegungsabläufen zu zweidimensionalen, statischen Graphen, insbesondere zur Umwandlung von zweidimensionalen Sport-Strategieaufzeichnungen zu virtuell dreidimensionalen Bewegungsabläufen einerseits und dreidimensionale Bewegungsabläufe einer Sportszene in eine Sport-Strategieaufzeichnung andererseits, wobei perspektivische und stilistische Rahmenbedingungen, wie Beobachtungsperspektive, naturalistische Darstellung der Elemente und Be- und Ausleuchtung, berücksichtigt werden und die zu wandelnden Informationen als numerische Koordinaten in das Verfahren eingehen und diese Informationen bei der Wandlung eines dreidimensionalen Bewegungsablaufes durch eine statistische Regressionsrechnung optimiert werden und bei der Wandlung von zweidimensionalen Daten in einen virtuell dreidimensionalen Bewegungsablauf zusätzliche vorwählbare Bewegungsdaten den einzelnen Objekten zugeordnet werden.

2. Verfahren zur Erstellung virtuell dreidimensionaler Bewegungsabläufe gemäß Anspruch 1, insbesondere Szenen eines Fußballspiels, in welchem die einzelnen Elemente, beispielsweise Spieler, Schiedsrichter und Ball, auf einem zweidimensionalen Wiedergabegerät animiert und perspektivische und stilistische Rahmenbedingungen, wie Beobachtungsperspektive, naturalistische Darstellung der Elemente und Be- und Ausleuchtung, berücksichtigt werden,
**gekennzeichnet durch**
die Dateneingabe in das Verfahren in Form eines zweidimensionalen Graphen.

3. Verfahren nach Anspruch 1 oder 2,
**gekennzeichnet durch**
die Erfassung der Daten des zweidimensionalen Graphen mit Hilfe eines Zeigegeräts, wie beispielsweise Maus, Trackpad, Graphiktablett oder Eingabehandschuh.

4. Verfahren nach Anspruch 1 oder 2,
**gekennzeichnet durch**
die Erfassung der Daten des zweidimensionalen Graphen mit Hilfe eines Eingabegerätes für zweidimensionale Objekte, wie beispielsweise ein Scanner.

5. Verfahren nach einem der Ansprüche 1 bis 4,
**gekennzeichnet durch**
**durch** die Zuordnung von Gestiken zu den einzelnen Elementen des Bewegungsablaufes, wobei die Gestiken das Ergebnis unterschiedlicher Eingabevariationen, beispielsweise in Form von wellenartigen Linien, unterbrochenen Linien oder durchgezogenen Linien, sind.

6. Verfahren nach einem der Ansprüche 1 bis 5,
**gekennzeichnet durch**
die Zuordnung von Geschwindigkeiten zu einzelnen Elementen des dreidimensionalen Bewegungsablaufes und mathematischer Optimierung dieser Geschwindigkeiten **durch** eine Regressionsrechnung, die als Ergebnis das zeitgleiche Aufeinandertreffen einzelner, ausgewählter Elemente und/oder Elementkombinationen in dem dreidimensionalen Bewegungsablauf hat.

7. Verfahren zur Erstellung zweidimensionaler Graphen gemäß Anspruch 1, insbesondere Sport-Strategieaufzeichnungen eines Fußballspiels, in welchem die Bewegung der einzelnen Elemente, beispielsweise Spieler, Schiedsrichter und Ball, als zweidimensionaler Graph dargestellt werden,
**gekennzeichnet durch**
die Dateneingabe in das Verfahren **durch** eine Erfassungseinheit, welche die zeitanhängigen Raumkoordinaten der einzelnen Elemente in dem dreidimensionalen Bewegungsablauf verfolgt und in das Verfahren als numerische Daten eingibt.

8. Verfahren nach Anspruch 1 oder 7,
**gekennzeichnet durch**
die Erfassung der zeitabhängigen Raumkoordinaten des dreidimensionalen Bewegungsablaufes **durch** ein Raumkoordinatenerfassungsgerät, wie beispielsweise eine Stereokamera, welche mit einer Anordnung zur automatischen Verfolgung von Objekten ausgerüstet ist.

9. Verfahren nach Anspruch 1, 7 oder 8,
**gekennzeichnet durch**
die Zuordnung der Bewegungsabläufe einzelner Objekte im dreidimensionalen Bewegungsablauf zu unterschiedlichen Gestaltungselementen im zweidimensionalen Graphen.

10. Verfahren nach Anspruch 1 oder einem der Ansprüche 7 bis 9,
**gekennzeichnet durch**
die Wiedergabe des zweidimensionalen Graphen auf einem Sichtgerät oder einem Drucker.

11. Verfahren nach Anspruch 1 oder einem der Ansprüche 7 bis 10,
**gekennzeichnet durch**
die Zwischenspeicherung der zeitabhängigen Raumkoordinaten der einzelnen Elemente und mathematischer Optimierung dieser gespeicherten Raumkoordinaten **durch** Glättung der **durch** die Raumkoordinaten beschriebenen Raumkurve und/oder **durch** Ausrichtung der Bewegungsstart- oder Bewegungsendpunkte an einem virtuellen Raster bei der Umwandlung eines dreidimensionalen Bewegungsablaufes in einen zweidimensionalen Graphen.

## Geänderte Patentansprüche

### Geänderte Patentansprüche gemäss Regel 86(2) EPÜ.

**1.** Verfahren zur Umwandlung von dreidimensionalen, mit der Zeit veränderlichen Bewegungsabläufen zu zweidimensionalen, statischen Graphen, insbesondere zur Umwandlung von dreidimensionalen Bewegungsabläufen einer Sportszene in eine Sport-Strategieaufzeichnung, wobei perspektivische und stilistische Rahmenbedingungen, wie Beobachtungsperspektive, naturalistische Darstellung der Elemente und Be- und Ausleuchtung, berücksichtigt werden und die zu wandelnden Informationen als numerische Koordinaten in das Verfahren eingehen und diese Informationen bei der Wandlung eines dreidimensionalen Bewegungsablaufes durch eine statistische Regressionsrechnung optimiert werden,
**gekennzeichnet durch**
die Zuordnung der Bewegungsabläufe einzelner Objekte im dreidimensionalen Bewegungsablauf zu unterschiedlichen Gestaltungselementen im zweidimensionalen Graphen.

**2.** Verfahren zur Umwandlung von zweidimensionalen Sport-Strategieaufzeichnungen zu virtuell dreidimensionalen Bewegungsabläufen, wobei perspektivische und stilistische Rahmenbedingungen, wie Beobachtungsperspektive, naturalistische Darstellung der Elemente und Be- und Ausleuchtung, berücksichtigt werden und die zu wandelnden Informationen als numerische Koordinaten in das Verfahren eingehen und diese Informationen bei der Wandlung von zweidimensionalen Daten in einen virtuell dreidimensionalen Bewegungsablauf zusätzliche vorwählbare Bewegungsdaten den einzelnen Objekten zugeordnet werden,
**gekennzeichnet durch**
die Zuordnung von Gestiken zu den einzelnen Elementen des Bewegungsablaufes, wobei die Gestiken das Ergebnis unterschiedlicher Eingabevariationen, beispielsweise in Form von Wellenartigen Linien, unterbrochenen Linien oder durchgezogenen Linien, sind.

**3.** Verfahren zur Erstellung virtuell dreidimensionaler Bewegungsabläufe gemäß Anspruch 2, insbesondere Szenen eines Fußballspiels, in welchem die einzelnen Elemente, beispielsweise Spieler, Schiedsrichter und Ball, auf einem zweidimensionalen Wiedergabegerät animiert und perspektivische und stilistische Rahmenbedingungen, wie Beobachtungsperspektive, naturalistische Darstellung der Elemente und Be- und Ausleuchtung, berücksichtigt werden,
**gekennzeichnet durch**
die Dateneingabe in das Verfahren in Form eines zweidimensionalen Graphen.

**4.** Verfahren nach Anspruch 2 oder 3,
**gekennzeichnet durch**
die Erfassung der Daten des zweidimensionalen Graphen mit Hilfe eines Zeigegeräts, wie beispielsweise Maus, Trackpad, Graphiktablett oder Eingabehandschuh.

**5.** Verfahren nach Anspruch 2 oder 3,
**gekennzeichnet durch**
die Erfassung der Daten des zweidimensionalen Graphen mit Hilfe eines Eingabegerätes für zweidimensionale Objekte, wie beispielsweise ein Scanner.

**6.** Verfahren nach einem der Ansprüche 2 bis 5,
**gekennzeichnet durch**
**durch** die Zuordnung von Gestiken zu den einzelnen Elementen des Bewegungsablaufes, wobei die Gestiken das Ergebnis unterschiedlicher Eingabevariationen, beispielsweise in Form von wellenartigen Linien, unterbrochenen Linien oder durchgezogenen Linien, sind.

**7.** Verfahren nach einem der Ansprüche 2 bis 6,
**gekennzeichnet durch**
die Zuordnung von Geschwindigkeiten zu einzelnen Elementen des dreidimensionalen Bewegungsablaufes und mathematischer Optimierung dieser Geschwindigkeiten **durch** eine Regressionsrechnung, die als Ergebnis das zeitgleiche Aufeinandertreffen einzelner, ausgewählter Elemente und/oder Elementkombinationen in dem dreidimensionalen Bewegungsablauf hat.

**8.** Verfahren zur Erstellung zweidimensionaler Graphen gemäß Anspruch 1, insbesondere Sport-Strategieaufzeichnungen eines Fußballspiels, in welchem die Bewegung der einzelnen Elemente, beispielsweise Spieler, Schiedsrichter und Ball, als zweidimensionaler Graph dargestellt werden,
**gekennzeichnet durch**
die Dateneingabe in das Verfahren **durch** eine Erfassungseinheit, welche die zeitanhängigen Raumkoordinaten der einzelnen Elemente in dem dreidimensionalen Bewegungsablauf verfolgt und in das Verfahren als numerische Daten eingibt.

**9.** Verfahren nach Anspruch 1 oder 8,
**gekennzeichnet durch**
die Erfassung der zeitabhängigen Raumkoordinaten des dreidimensionalen Bewegungsablaufes **durch** ein Raumkoordinatenerfassungsgerät, wie beispielsweise eine Stereokamera, welche mit einer Anordnung zur automatischen Verfolgung von Objekten ausgerüstet ist.

**10.** Verfahren nach Anspruch 1, 8 oder 9,
**gekennzeichnet durch**
die Zuordnung der Bewegungsabläufe einzelner Objekte im dreidimensionalen Bewegungsablauf zu unterschiedlichen Gestaltungselementen im zweidimensionalen Graphen.

**11.** Verfahren nach Anspruch 1 oder einem der Ansprüche 8 bis 10,
**gekennzeichnet durch**
die Wiedergabe des zweidimensionalen Graphen auf einem Sichtgerät oder einem Drucker.

**12.** Verfahren nach Anspruch 1 oder einem der Ansprüche 9 bis 11,
**gekennzeichnet durch**
die Zwischenspeicherung der zeitabhängigen Raumkoordinaten der einzelnen Elemente und mathematischer Optimierung dieser gespeicherten Raumkoordinaten **durch** Glättung der **durch** die Raumkoordinaten beschriebenen Raumkurve und/oder **durch** Ausrichtung der Bewegungsstart- oder Bewegungsendpunkte an einem virtuellen Raster bei der Umwandlung eines dreidimensionalen Bewegungsablaufes in einen zweidimensionalen Graphen.
